Europäisches Patentamt

European Patent Office

Office européen des brevets

(19)

(11) **EP 1 009 105 A1**

# (12) DEMANDE DE BREVET EUROPEEN

(43) Date de publication:
**14.06.2000 Bulletin 2000/24**

(51) Int. Cl.$^7$: **H04B 1/707**, H04B 7/26

(21) Numéro de dépôt: **99204013.9**

(22) Date de dépôt: **29.11.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.12.1998 FR 9815483**

(71) Demandeur:
**Koninklijke Philips Electronics N.V.**
**5621 BA Eindhoven (NL)**

(72) Inventeur: **Khalifa, Nabil**
**75008 Paris (FR)**

(74) Mandataire: **Chaffraix, Jean**
**Société Civile S.P.I.D.**
**156, Boulevard Haussmann**
**75008 Paris (FR)**

(54) **Récepteur, système de télécommunications CDMA et procédé de synchronisation d'un récepteur avec une station d'émission d'un tel système**

(57) L'invention concerne un récepteur et un système de télécommunications CDMA comportant plusieurs stations d'émission. Le récepteur comporte des moyens de synchronisation pour se synchroniser avec au moins une station d'émission émettant périodiquement sur un canal de synchronisation commun, un code de synchronisation cyclique constitué d'un signal pilote $C_p$ et d'un signal utile contenant un code $C_{S,t}$. La période d'émission du code de synchronisation par la station d'émission est notée T. Le récepteur comporte des moyens de corrélation pour acquérir la phase du code de synchronisation cyclique et pour déterminer le code $C_{S,t}$ contenu dans le signal utile à l'instant t parmi une pluralité de codes orthogonaux de référence définis par le système, avant l'émission du prochain code de synchronisation à l'instant t + T contenant un nouveau signal utile $C_{S,\,t-T}$.

Application : télécommunications CDMA, en particulier radiotéléphonie UMTS, ARIB, IMT-2000, etc.

FIG.2

EP 1 009 105 A1

**Description**

L'invention concerne un récepteur comportant un dispositif de synchronisation pour se synchroniser avec une station d'émission d'un système de télécommunications de type CDMA, ladite station émettant à une période $T = k L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le dispositif comportant des moyens d'acquisition pour acquérir le signal pilote $C_P$ en un temps d'acquisition égal à la période L, et pour en déduire la phase de synchronisation $\tau$ et le signal utile contenant le code $C_S$ à déterminer.

Elle concerne également un système de télécommunications de type CDMA comportant au moins un récepteur et une pluralité de stations d'émission, chaque station émettant à une période $T = k L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le récepteur comportant un dispositif de synchronisation comportant des moyens d'acquisition pour acquérir le signal pilote $C_P$ ai un temps d'acquisition égal à la période L, et pour en déduire la phase de synchronisation $\tau$ et le signal utile contenant le code $C_S$ à déterminer.

Elle concerne enfin un procédé de synchronisation d'un récepteur avec une station d'émission d'un système de télécommunications de type CDMA, ladite station émettant à une période $T = k L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le procédé comportant une étape d'acquisition pour acquérir le signal pilote $C_P$ en un temps d'acquisition égal à la période L, et pour en déduire la phase de synchronisation $\tau$ et le signal utile contenant le code $C_S$ à déterminer.

L'invention a de nombreuses applications, notamment dans les systèmes de radiocommunications mobiles utilisant une technique d'accès multiple à étalement de spectre de type CDMA à séquence directe.

L'article intitulé 〈〈 Mathematical Modelling and Performance Analysis for a Two-stage Acquisition Scheme for Direct-Sequence Spread-Spectrum CDMA 〉〉 de Upamanyu Madhow et al., paru dans la revue IEEE transactions on communications, vol. 43, n° 9, septembre 1995, pages 2511 à 2519 décrit une méthode de synchronisation applicable à un système à accès multiples répartis par codes ou CDMA utilisant une technique d'étalement de spectre dit à séquence directe. La méthode consiste à effectuer l'acquisition du code de synchronisation au niveau du récepteur en deux étapes, la première étape utilisant un filtre adapté programmable pour effectuer une détection initiale sur une portion seulement du code de synchronisation et la deuxième utilisant un corrélateur pour vérification.

Un objet de la présente invention est de proposer une méthode de synchronisation rapide d'un récepteur sur une station d'émission d'un système de type CDMA applicable même lorsque le rapport signal à bruit en entrée du récepteur est dégradé.

Or, la méthode en deux étapes citée, dont le but est de rechercher un compromis entre complexité et performances, nécessite un rapport signal à bruit assez bon en entrée du récepteur pour pouvoir se contenter d'une portion seulement du code de synchronisation et obtenir une très bonne probabilité d'acquisition du code de synchronisation. En revanche, le temps nécessaire à l'acquisition selon cette méthode est supérieur à celui obtenu à l'aide d'un filtre adapté passif classique.

Pour remédier à ces inconvénients, l'invention prévoit un récepteur radio ainsi qu'un système de télécommunications du genre de ceux mentionnés dans le paragraphe introductif remarquables en ce que le dispositif de synchronisation comporte un générateur de codes orthogonaux susceptible de générer les R codes de phase $\tau$ et des moyens de corrélation associés à des moyens de détection de pic pour effectuer, pendant les k-1 périodes L de code restantes avant la fin de la période T, R produits de corrélation entre le code $C_S$ et les R codes générés, pour déterminer le code $C_S$.

Selon une caractéristique importante de l'invention, les moyens de corrélation coopèrent avec le générateur de codes pour effectuer, pendant une période de code L, un nombre n de produits de corrélation égal à R / k-1 si le résultat de la division est entier et égal à la partie entière du résultat +1 sinon.

Selon une autre caractéristique de l'invention le générateur de codes orthogonaux est susceptible de générer les R codes orthogonaux pour alimenter les moyens de corrélation, au rythme de n codes par période L, n étant égal à R / k-1 si le résultat de la division est entier et égal à la partie entière du résultat +1 sinon.

Dans un mode de réalisation préféré de l'invention, les moyens d'acquisition du signal pilote $C_P$ comportent un filtre passif adapté qui est réutilisé ensuite par les moyens de corrélation pour recevoir sur une première entrée les R codes de génération fournis par le générateur de codes au rythme de n codes par période L et sur une deuxième entrée le code $C_S$ à déterminer.

La description suivante, faite en regard des dessins ci-annexés, le tout donné à titre d'exemple non limitatif fera bien comprendre comment invention peut être réalisée.

La figure 1 est un schéma montrant la structure d'un canal de synchronisation.
La figure 2 est un exemple de récepteur radio selon l'invention pour recevoir un signal à spectre étalé par séquence directe.

La figure 3 illustre un récepteur selon un mode de réalisation préféré de l'invention.

La figure 4 illustre un système de télécommunications CDMA selon l'invention.

La figure 5 est un organigramme pour illustrer un procédé de synchronisation selon l'invention.

La figure 6 représente un récepteur selon un autre mode de réalisation de l'invention.

Dans un système de télécommunications à accès multiple réparti par codes ou CDMA tous les utilisateurs partagent une même ressource, notamment la bande passante, pour accéder sur demande à un canal de communications. Selon la technique CDMA, dite à étalement de spectre, chaque utilisateur dispose à chaque instant de toute la largeur de bande disponible pour transmettre un message susceptible d'occuper une bande plus étroite, et utilise un certain code d'étalement ayant des propriété particulières pour coder son message. Chaque utilisateur doit utiliser un code d'étalement différent afin d'éviter les interférences avec d'autres messages transmis par d'autres utilisateurs sur la même bande de fréquences. Les propriétés de ces codes étant bien connues, elles ne seront pas détaillées ici.

Tous les messages, codés selon des codes deux à deux orthogonaux, sont additionnés pour former un signal composite transmis dans une même bande de fréquences. Pour que le destinataire du message puisse décoder l'information qui lui est destinée, l'émetteur et le récepteur doivent utiliser le même code d'étalement. En réception, le récepteur sélectionne le message qui lui est destiné, en effectuant une corrélation entre le message composite reçu et le code d'étalement original. Pour y parvenir, il est impératif que l'émetteur et le récepteur soient synchronisés.

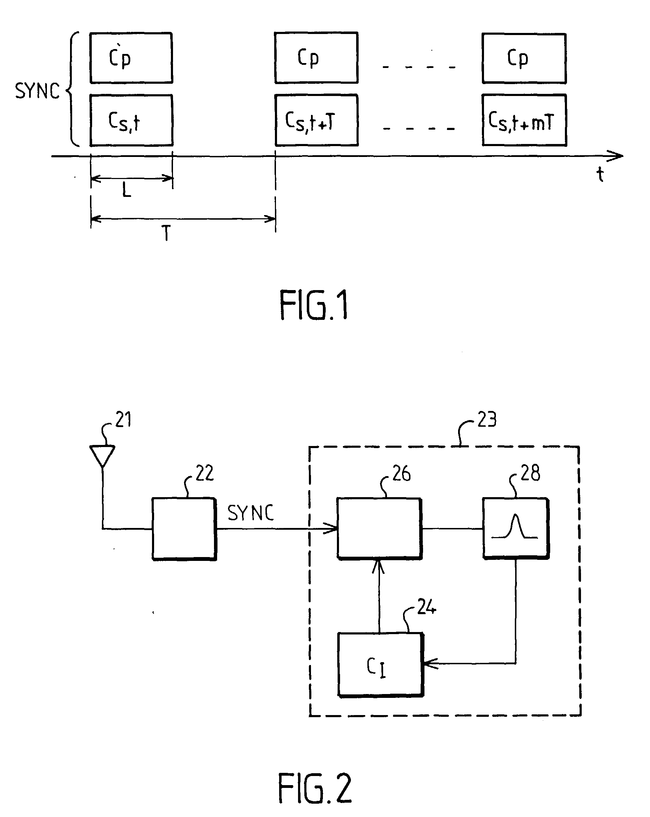

Pour cela, il est prévu un canal de synchronisation, représenté à la figure 1, sur lequel l'émetteur transmet périodiquement un signal de synchronisation composite, noté SYNC, destiné à permettre au récepteur de se synchroniser avec l'émetteur. La période d'émission du signal composite est notée T. Il contient deux codes superposés de même période (ou cycle, ou longueur) notée L, et de même phase notée $\tau$. La période T du signal est un multiple entier k de la longueur L du code composite de synchronisation. Le premier code, noté $C_P$ est un code pilote prédéterminé commun à toutes les stations d'émission et connu de tous les récepteurs du système. Il permet au récepteur de récupérer la phase $\tau$ par exemple à l'aide d'un filtre adapté. Le second code, noté $C_{S, t}$ à $C_{S, t+mT}$, représente le signal utile à déterminer parmi une pluralité de codes orthogonaux possibles de longueur L définis par le système. Le code $C_S$ permet par exemple, de déterminer le code d'étalement utilisé par l'émetteur pour identifier la station d'émission ainsi que pour détecter le début de la trame émise dont l'origine et la longueur (fixe) dépendent de la station d'émission considérée.

Une fois le code pilote $C_P$ acquis et sa phase $\tau$ récupérée, la partie utile $C_S$ du signal de synchronisation peut être mémorisée pour être déterminée ultérieurement, sa phase, identique à celle du code pilote $C_P$ étant déjà connue. En supposant que l'acquisition du code pilote est effectuée par un filtre adapté de type classique, le temps d'acquisition de la phase $\tau$ est égal à la période L du code. Il reste donc k-1 périodes de code L avant rémission du prochain signal de synchronisation contenant le signal pilote $C_P$ additionné à un nouveau code $C_S$ à déterminer parmi la pluralité de codes $C_S$ possibles.

Selon un objet de l'invention consistant à acquérir le signal de synchronisation rapidement pour éviter les pertes d'information, le code $C_{S, t}$ reçu à l'instant t doit être déterminé avant l'émission du prochain code $C_{S, t+T}$ à l'instant t + T.

Pour cela, le récepteur représenté à titre d'exemple à la figure 2, comprend une antenne 21, un convertisseur en bande de base 22 pour ramener le signal reçu dans la bande du signal d'origine et un dispositif de synchronisation 23 comportant :

- un générateur de codes orthogonaux 24 pour générer le code du signal pilote $C_P$ et les R codes de référence de phase $\tau$, notés $C_I$ à $C_{I+R}$,
- des moyens de corrélation 26, pour effectuer l'acquisition du signal pilote $C_P$ pendant un temps d'acquisition égal à la période L du code, pour en déduire la phase $\tau$ du code de synchronisation ainsi que le signal utile contenant le code $C_{S, t}$ à déterminer, et pour effectuer ensuite pendant les k-1 périodes de code L restantes avant la fin de la période T, les R produits de corrélation entre le code $C_{S, t}$ et les R codes de référence et
- des moyens de détection de pic 28 associés aux moyens de corrélation 26 pour détecter un pic de corrélation en sortie des moyens de corrélation et pour déterminer lequel des R codes de référence générés correspond au code $C_{S, t}$ reçu à l'instant t.

La fréquence de l'horloge qui pilote le générateur de codes ainsi que les moyens de corrélation est réglée pour alimenter les moyens de corrélation à un rythme suffisant pour que tous les R codes possibles aient été scannés avant la fin de la période T. Pour cela, il suffit de régler le générateur pour fournir n codes par période L, n étant égal à R / k-1 si le résultat de la division est entier et égal à la partie entière du résultat +1 sinon. Ainsi, les n produits de corrélation peuvent être calculés en une période de code L, pour qu'à la fin de la période T tous les codes possibles aient été scannés par les moyens de corrélation, et pour que le code $C_{S, t}$ reçu à l'instant t ait pu être déterminé avant la réception du prochain code de synchronisation $C_{S, t+T}$ à l'instant t + T.

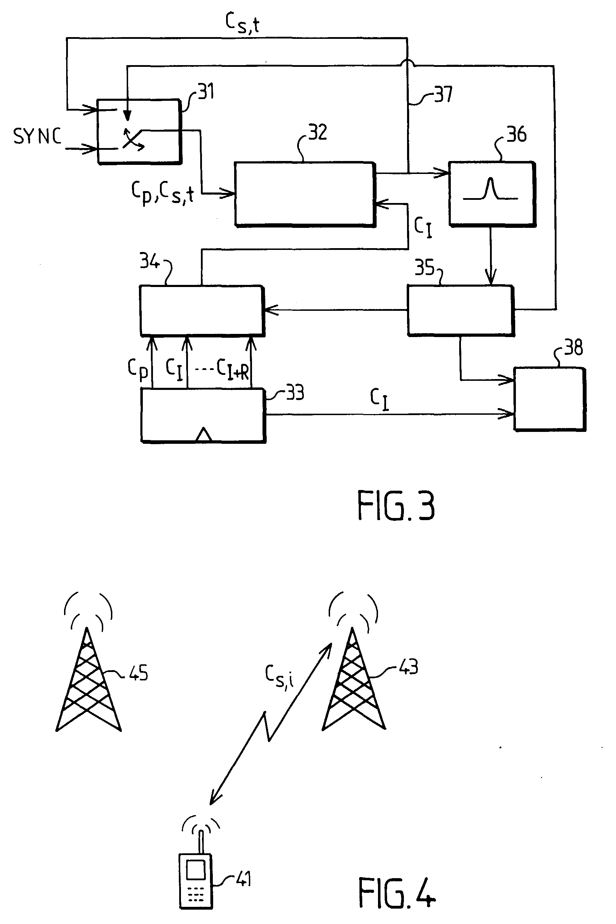

Selon le mode de réalisation préféré de l'invention, le dispositif de synchronisation 23 est représenté plus en détails à la figure 3. Les moyens de corrélation 26 comportent un commutateur 31 recevant le signal de synchronisation composite SYNC et un filtre passif adapté 32 également utilisé pour l'acquisition du signal pilote $C_P$. Le filtre adapté 32 est alimenté par un générateur de codes orthogonaux 33 via un multiplexeur 34 piloté par un organe de contrôle 35 et relié à un détecteur de pic de corrélation 36 pour indiquer la détection du code $C_{S,t}$ parmi R codes de référence, $C_I$ à $C_{I+R}$, générés par le générateur de codes 33. Le filtre adapté 32 sert également à mémoriser le signal utile $C_{S,t}$ pendant les calculs, à l'aide d'une boude 37 et du commutateur 31 permettant de rebouder la sortie du filtre sur son entrée.

La fréquence d'horloge du générateur de codes et des moyens de corrélation est réglée pour alimenter le filtre adapté 32 au rythme de n codes par période L, n étant égal à R / k-1 si le résultat de la division est entier et égal à la partie entière du résultat +1 sinon, pour que les R codes possibles aient été scannés avant la fin de la période T, sachant que le temps d'acquisition du code pilote $C_P$ et de sa phase $\tau$ est égal à une période L du code. L'identité du code $C_{S,t}$ détecté peut éventuellement être enregistrée dans une mémoire 38 en attendant la détection de tous les autres codes $C_S$ formant une séquence, en vue d'identifier la station d'émission. L'identité du code $C_{S,t}$ détecté, fournie par le générateur de code 33, est copiée dans la mémoire 38 sous la commande de l'organe de contrôle 35.

Le système représenté schématiquement à titre d'exemple à la figure 4 est un système de radiocommunications mobiles fonctionnant selon un standard de type UMTS (de l'anglais Universal Mobile Telecommunications Standard) conforme au projet de normalisation développé par le comité ETSI (de l'anglais European Telecommunication Standards Institute) 〈〈 The ETSI UMTS Terrestial Radio Access ITU-R RTT Candidate Submission 〉〉 datée de mai/juin 1998. Cependant, l'invention peut avantageusement être mise en oeuvre dans d'autres systèmes de télécommunications de type CDMA nécessitant une synchronisation rapide entre l'émetteur et le récepteur, notamment dans des systèmes comme le standard japonais appelé ARIB ou le standard mondial appelé IMT-2000.

Pour simplifier, le système ne comporte qu'un seul récepteur 41 et seulement deux stations radio de base 43 et 45 émettant chacune un code de synchronisation permettant de les identifier. En effet, selon le standard UMTS, le code $C_S$ contenu dans la partie utile du canal de synchronisation est un élément d'une séquence prédéfinie de 16 codes orthogonaux $C_{S,i}$ à $C_{S,i+16}$ destinée à identifier la station de base émettrice; chaque code orthogonal étant extrait d'un ensemble de 17 codes possibles. Le but de la synchronisation consiste à acquérir le code pilote $C_P$ dans un premier temps, pour déterminer se phase $\tau$ ainsi que la position du signal utile $C_S$ sur le canal de synchronisation et dans un deuxième temps, à déterminer chacun des éléments de la séquence pour identifier la station de base, au plus tard à la fin des 16 périodes, pour établir rapidement une communication avec la station de base identifiée.

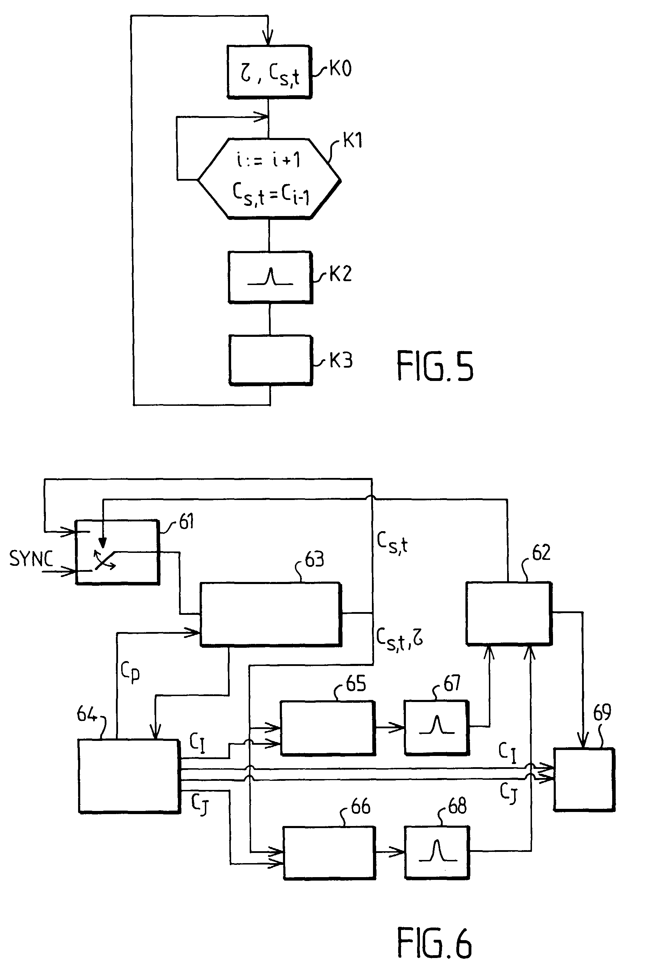

Un procédé de synchronisation susceptible d'être mis en oeuvre par un récepteur tel que celui représenté à la figure 3 est illustré à la figure 5. Les différentes étapes du procédé sont représentées par des blocs K0 à K3.

- K0 est une étape d'acquisition du signal pilote et de mémorisation du signal utile à l'aide d'un filtre adapté pour récupérer la phase $\tau$ du code de synchronisation et pour mémoriser le code $C_{S,t}$ émis à l'instant t en vue de le déterminer. Le temps d'acquisition et de mémorisation correspond à une période L du code de synchronisation.
- K1 est une étape de calcul de corrélation pour comparer successivement le code $C_{S,t}$ avec les R codes de référence notés $C_I$ à $C_{I+R}$, à l'aide du même filtre adapté que celui utilisé à rétape K0, pendant le temps restant avant l'émission du prochain signal de synchronisation. C'est-à-dire, en supposant que la période T du signal de synchronisation est égale à un multiple entier k de la période L du code, les R calculs de corrélation sont effectués pendant les k-1 périodes L restantes, ce qui est réalisé en réglant b vitesse du générateur de codes orthogonaux ainsi que celle des moyens de corrélation pour qu'il alimente le filtre adapté au rythme d'exécution des calculs.
- K2 est une étape de détection de niveau pour détecter un pic de corrélation indiquant que le code $C_{S,t}$ est corrélé avec l'un des codes de référence $C_I$.
- K3 est une étape d'enregistrement de l'identité du code détecté, parmi tous les codes de référence $C_I$. Le procédé reprend ensuite à l'étape K0 pour acquérir le code de synchronisation émis à l'instant t + T, et ainsi de suite jusqu'à ce que tous les éléments de la séquence soient identifiés.

Un autre mode de réalisation de l'invention représentant le dispositif de synchronisation 23 est illustré à titre d'exemple à b figure 6. Il comprend un commutateur 61 commandé par un organe de contrôle 62 pour recevoir le signal de synchronisation composte SYNC sur une première entrée et la sortie rebouclée d'un filtre passif adapté 63 sur une deuxième entrée. Dans ce mode de réalisation de l'invention, le filtre adapté 63 est utilisé uniquement pour l'acquisition du signal pilote $C_P$ c'est-à-dire pour récupérer la phase $\tau$ du code et pour mémoriser le signal utile $C_{S,t}$ émis à l'instant t. Tout autre moyen pour mémoriser le signal utile $C_{S,t}$ peut être utilisé à titre de variante. Un générateur de codes orthogonaux 64 est prévu pour fournir au filtre adapté 62, le code de référence $C_P$ ainsi que les autres codes de référence (notés $C_I$ et $C_J$) correspondant aux codes $C_S$, pour alimenter 2 corrélateurs série 65 et 66 reliés à 2 détecteurs de pic 67 et 68. Sachant que la phase $\tau$ du code $C_{S, t}$ recherché a déjà été définie à partir du code $C_P$, les corrélateurs 65 et 66 multiplient le signal $C_{S, t}$ avec le code de référence $C_I$ ou $C_J$ genéré et intègrent le résultat sur la période L du code.

On suppose pour simplifier la figure 6 que dans cet exemple, le nombre de codes de référence possibles est au plus égal à deux fois le nombre de périodes de code restantes avant la fin de la période d'émission du signal de synchronisation SYNC, c'est-à-dire: $1 < R / k\text{-}1 \leq 2$. Chaque corrélateur reçoit à chaque nouvelle période L, un nouveau code de génération $C_I$ ou $C_J$ sur une première entrée et sur une deuxième entrée, le code $C_{S, t}$ à déterminer. Deux produits de corrélation sont ainsi effectués en parallèle avec le code $C_{S, t}$ jusqu'à le détection d'un pic de corrélation par l'un des détecteurs de pic 67 ou 68. L'organe de contrôle 62 est informé du résultat de la détection par chaque détecteur de pic pour, lorsque l'un des détecteurs détecte un pic de corrélation entre le code $C_{S, t}$ et un code de référence $C_I$ ou $C_J$, copier l'identité du code $C_I$ ou $C_J$ détecté dans une mémoire 69 à partir de l'identité de ce code fournie, par exemple, par le générateur de codes 64.

Ainsi a-t-on décrit et illustré à l'aide d'exemples un récepteur et un système de télécommunications CDMA ainsi qu'un procédé de synchronisation du récepteur sur une station d'émission dudit système. Bien entendu, des variantes de réalisation pourront être apportées sans sortir du cadre de l'invention.

**Revendications**

1. Récepteur comportant un dispositif de synchronisation pour se synchroniser avec une station d'émission d'un système de télécommunications de type CDMA, ladite station émettant à une période $T = k\,L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le dispositif comportant des moyens d'acquisition pour acquérir le signal pilote $C_P$ en un temps d'acquisition égal à la période L, et pour en déduire la phase de synchronisation $\tau$ et le signal utile contenant le code $C_S$ à déterminer, **caractérisé en ce que** le dispositif comporte un générateur de codes orthogonaux susceptible de générer les R codes de phase $\tau$ et des moyens de corrélation associés à des moyens de détection de pic pour effectuer, pendant les k-1 périodes de code L restantes avant la fin de la période T, R produits de corrélation entre le code $C_S$ et les R codes générés, pour déterminer le code $C_S$.

2. Récepteur selon la revendication 1, caractérisé en ce que les moyens de corrélation coopèrent avec le générateur de codes pour effectuer, pendant une période de code L, un nombre n de produits de corrélation égal à $R / k\text{-}1$ si le résultat de la division est entier et égal à la partie entière du résultat +1 sinon.

3. Récepteur selon la revendication 2, caractérisé en ce que le générateur de codes orthogonaux est susceptible de générer les R codes orthogonaux pour alimenter les moyens de corrélation, au rythme de n codes par période L, n étant égal à $R / k\text{-}1$ si le résultat de la division est entier et égal à la partie entière du résultat +1 sinon.

4. Récepteur selon la revendication 3, les moyens d'acquisition du signal pilote $C_P$ comportant un filtre passif adapté.

5. Récepteur selon la revendication 4, caractérisé en ce que les moyens de corrélation comprennent ledit filtre adapté pouvant recevoir sur une première entrée, le code $C_S$ à déterminer et sur une deuxième entrée, les R codes de génération fournis au rythme de n codes par période L, n étant égal à $R / k\text{-}1$ si le résultat de la division est entier et égal à la partie entière du résultat +1 sinon.

6. Récepteur selon la revendication 4, caractérisé en ce que les moyens de corrélation comprennent n corrélateurs associés à n détecteurs de pic, chaque corrélateur recevant en entrée à chaque nouvelle période L, un nouveau code de génération fourni par le générateur de codes orthogonaux ainsi que le code $C_S$ à déterminer, pour effectuer en parallèle les n produits de corrélation jusqu'à la détection d'un pic de corrélation par l'un des détecteurs de pic.

7. Récepteur radio selon l'une des revendications 1 à 6, comportant un dispositif de synchronisation pour se synchroniser avec une station radio de base d'un système de radiocommunications mobiles conforme à un standard de type UMTS (de l'anglais Universal Mobile Telecommunications System), caractérisé en ce que le code $C_S$ contenu dans le signal utile est un élément d'une séquence prédéfinie de M codes orthogonaux $C_{S,I}$ à $C_{S,I+M}$ destinée à identifier la station de base émettrice.

8. Système de télécommunications de type CDMA comportant au moins un récepteur et une pluralité de stations d'émission, chaque station émettant à une période $T = k\,L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le récepteur comportant un dispositif de synchronisation comportant des moyens d'acquisition pour acquérir le signal pilote $C_P$ en un temps d'acquisition égal à la période L, et pour en déduire la phase de synchronisation $\tau$ et le signal utile contenant le code $C_S$ à déterminer,

**caractérisé en ce que** le dispositif comporte un genérateur de codes orthogonaux susceptible de générer les R codes de phase $\tau$ et des moyens de corrélation associés à des moyens de détection de pic pour effectuer, pendant les k-1 périodes de code L restantes avant la fin de la période T, R produits de corrélation entre le code $C_S$ et les R codes générés, pour déterminer le code $C_S$.

9. Procédé de synchronisation d'un récepteur avec une station d'émission d'un système de télécommunications de type CDMA, ladite station émettant à une période $T = k\,L$, où k est entier, un code de synchronisation périodique de longueur L et de phase $\tau$ constitué d'un signal pilote $C_P$ superposé à un signal utile codé selon un code $C_S$ choisi parmi R codes orthogonaux de longueur L, le procédé comportant une étape d'acquisition pour acquérir le signal pilote $C_P$ en un temps d'acquisition égal à la période L, et pour en déduire la phase de synchronisation $\tau$ et le signal utile contenant le code $C_S$ à déterminer,

**caractérisé en ce qu'**il comporte une étape de génération de codes orthogonaux pour générer les R codes de phase $\tau$ et une étape de corrélation associée à une étape de détection de pic pour effectuer, pendant les k-1 périodes de code L restantes avant la fin de la période T, R produits de corrélation entre le code $C_S$ et les R codes générés, pour déterminer le code $C_S$.

FIG.1

FIG.2

FIG.3

FIG.4

FIG.5

FIG.6

**Office européen des brevets**

**RAPPORT DE RECHERCHE EUROPEENNE**

Numéro de la demande

EP 99 20 4013

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl7) |
|---|---|---|---|
| A | US 5 416 797 A (GILHOUSEN KLEIN S ET AL) 16 mai 1995 (1995-05-16) <br> * colonne 5, ligne 55 - colonne 6, ligne 27 * <br> * colonne 18, ligne 15 - colonne 20, ligne 48 * | 1,8,9 | H04B1/707 <br> H04B7/26 |
| A | UHL C ET AL: "SINGLE ASIC CDMA DIGITAL RECEIVER FOR SPACE APPLICATIONS" PROCEEDINGS OF THE VEHICULAR TECHNOLOGY CONFERENCE, STOCKHOLM, JUNE 8 - 10, 1994, vol. 2, no. CONF. 44, 8 juin 1994 (1994-06-08), pages 1331-1335, XP000497636 INSTITUTE OF ELECTRICAL AND ELECTRONICS ENGINEERS <br> * page 1332, colonne de droite - page 1333, colonne de gauche; figure 2 * | 1,8,9 | |
| A | SWALES S C ET AL: "THE U.K. LINK PERSONAL COMMUNICATIONS PROGRAMME: DOWNLINK SYNCHRONISATION FOR A DS-CDMA FIELD TRIAL SYSTEM" PROCEEDINGS OF THE VEHICULAR TECHNOLOGY CONFERENCE, CHICAGO, JULY 25 - 28, 1995, vol. 2, no. CONF. 45, 25 juillet 1995 (1995-07-25), pages 784-788, XP000551641 INSTITUTE OF ELECTRICAL AND ELECTRONICS ENGINEERS <br> * le document en entier * | 7 | **DOMAINES TECHNIQUES RECHERCHES (Int.Cl7)** <br> H04B |

Le présent rapport a été établi pour toutes les revendications

| Lieu de la recherche | Date d'achèvement de la recherche | Examinateur |
|---|---|---|
| LA HAYE | 2 février 2000 | Amian, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 99 20 4013

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-02-2000

| Document brevet cité au rapport de recherche | Date de publication | Membre(s) de la famille de brevet(s) | | Date de publication |
|---|---|---|---|---|
| US 5416797 A | 16-05-1995 | US | 5103459 A | 07-04-1992 |
| | | US | 5841806 A | 24-11-1998 |
| | | US | 5943361 A | 24-08-1999 |
| | | AU | 652956 B | 15-09-1994 |
| | | AU | 8401691 A | 23-01-1992 |
| | | BG | 61514 B | 31-10-1997 |
| | | BG | 97222 A | 27-05-1994 |
| | | CA | 2085890 A | 26-12-1991 |
| | | CN | 1061312 A | 20-05-1992 |
| | | CZ | 283123 B | 14-01-1998 |
| | | EP | 0536334 A | 14-04-1993 |
| | | FI | 925812 A | 21-12-1992 |
| | | HU | 216989 B | 28-10-1999 |
| | | HU | 64657 A | 28-01-1994 |
| | | IL | 98598 A | 27-02-1994 |
| | | JP | 11317691 A | 16-11-1999 |
| | | JP | 2958433 B | 06-10-1999 |
| | | JP | 6501349 T | 10-02-1994 |
| | | KR | 134390 B | 27-04-1998 |
| | | MX | 173818 B | 29-03-1994 |
| | | NO | 925019 A | 23-12-1992 |
| | | PT | 98079 A,B | 31-08-1993 |
| | | SG | 52735 A | 28-09-1998 |
| | | SK | 387192 A | 10-08-1994 |
| | | WO | 9200639 A | 09-01-1992 |
| | | US | 5511073 A | 23-04-1996 |
| | | US | 5715236 A | 03-02-1998 |
| | | US | 5504773 A | 02-04-1996 |
| | | US | 5659569 A | 19-08-1997 |
| | | US | 5535239 A | 09-07-1996 |
| | | US | 5629955 A | 13-05-1997 |
| | | US | 5568483 A | 22-10-1996 |
| | | US | 5309474 A | 03-05-1994 |

EPO FORM P0460

Pour tout renseignement concernant cette annexe : voir Journal Officiel de l'Office européen des brevets, No.12/82